# EUROPEAN PATENT SPECIFICATION

(11) **EP 2 847 244 B1**
(45) Date of publication and mention of the grant of the patent: **23.08.2023**
(21) Application number: 13750134.2
(22) Date of filing: 22.05.2013
(51) Int. Cl.: C08F 251/00, C08F 283/02, C08F 289/00, C08F 290/06, C08G 63/181, C08G 63/183, C08G 63/672, C08G 63/685, C08G 63/91, C09D 167/02

(54) **POLYESTER BINDER MATERIAL FOR COATING COMPOSITION**
POLYESTERBINDEMATERIAL FÜR EINE BESCHICHTUNGSZUSAMMENSETZUNG
MATÉRIAU LIANT DE POLYESTER POUR COMPOSITION DE REVÊTEMENT

(30) Priority: 28.03.2012 US 201261616884 P
(43) Date of publication of application: 18.03.2015
(73) Proprietor: SWIMC LLC, Cleveland, Ohio 44115 (US)
(72) Inventor: SCHIRALDI, David, A., Shaker Heights, Ohio 44122 (US); SAMARANAYAKE, Gamini, S., Broadview Heights, Ohio 44147 (US); RAO, Madhukar, Twinsburg, Ohio 44087 (US); RUHOFF, Philip, J., Shaker Heights, Ohio 44122 (US); PORVASNIK, Stacey, A., Hinckley, Ohio 44233 (US)
(74) Representative: Novagraaf Group
(86) International application number: PCT/IB2013/054246
(87) International publication number: WO 2013/144933

(56) References cited:
- EP-A1- 1 178 092
- EP-A1- 1 217 023
- EP-A1- 2 325 229
- WO-A1-2011/038071
- WO-A2-2006/055505
- GB-A- 1 569 230
- US-A- 3 669 921
- US-A1- 2006 043 629
- US-A1- 2006 111 546
- US-A1- 2008 081 882
- US-B1- 6 429 233
- JACOB JOHN ET AL: "Properties of reactively blended soy protein and modified polyesters", POLYMER INTERNATIONAL, vol. 48, no. 11, 1 November 1999 (1999-11-01), pages 1165-1172, XP055095885, ISSN: 0959-8103, DOI: 10.1002/(SICI)1097-0126(199911)48:11<1165: :AID-PI286>3.0.CO;2-L
- MARÍA DE GRACIA GARCÍA-MARTÍN ET AL: "Linear Polyesters of the Poly[alkylene (and c o -arylene) dicarboxylate] Type Derived from Carbohydrates", MACROMOLECULES, vol. 39, no. 23, 1 November 2006 (2006-11-01), pages 7941-7949, XP055095853, ISSN: 0024-9297, DOI: 10.1021/ma061325o

## Description

This application claims the benefit of U.S. provisional patent application number 61/616,884 filed on March 28, 2012.

US 6,429,233 B1 describes a method for recycling a polyester chip which comprises providing a polyester chip (a), polyol (b) and polybasic acid (c), Subjecting said (a) and said (b) to transesterification reaction and reacting it with said (c) to give a reconstituted polyester resin, the total number of moles of hydroxyl group being not less than 1.03 times the total number of moles of carboxyl group in the material for the production of Said reconstituted polyester resin.

EP 2 325 229 A relates to hydroxyl-functional or carboxyl-functional polyesters comprising moieties of
(a) terephthalic acid and/or isophthalic acid,
(b) ethylene glycol,
(c) a dianhydrohexitol, and of
(d) one or more linear chain dicarboxylic acids;
wherein the polyester has a number average molecular of from 550 to 15000 daltons.

EP 1 178 092 A1 describes methacrylate or acrylate binders e.g. obtainable by the steps of (i) generating OH-precursors from at least one aromatic polyester, and (ii) reacting said OH-precursors of step (i) with methacrylic acid and/or acrylic acid to form a respective ester, whereby step (i) comprises reacting an aromatic polyester, or a mixture of aromatic polyesters with at least one polyol and/or at least one aminopolyol to generate hydroxy terminated oligomers.

EP 1 217 023 A1 relates to processes for producing within a short time transparent alkyd resins which are substantially free of occurrence of foreign matters or filtration residues are disclosed, which comprise depolymerizing polyester resins whose chief starting material is terephthalic acid and which have been recovered from waste materials and regenerated, with use of a polyhydric alcohol component having tetra- or higher hydric alcohol, and thereafter adding thereto a polybasic acid component (and if necessary a fatty acid component) to effect an esterification reaction.

### SUMMARY

This invention relates to a polymer, especially a hot melt adhesive-binder to be used in multiple applications such as traffic paints, prepared according to an admixing process that utilizes a polymerization and transesterification route with raw materials which, for some applications, can be of bio-based and/or renewable origin. The polymer is obtained by admixing under reactive conditions reactants comprising (i) an aliphatic diacid or reactive equivalent thereof, (ii) at least one diol, and (iii) a polyalkylene terephthalate or polyalkylene naphthenate, wherein an end-capping or chain stopping molecule is added to the reaction mixture before the polymerization is complete, further wherein the end-capping or chain stopping molecule is a monoacid or its ester, anhydride, or acid chloride and wherein (i) and (ii) are allowed to at least partially react before (iii) is added.

### BRIEF DESCRIPTION OF THE DRAWINGS

FIG. 1 illustrates a graphically-engineered stress-strain curve of a sample PBS copolymer as disclosed herein.
FIG. 2 illustrates a graphically-engineered stress-strain curve of a sample plastic-elastomer polyester as disclosed herein.
FIG. 3 illustrates a graphically-engineered stress-strain curve of a sample plastic-elastomer polyester as disclosed herein.
FIG. 4 illustrates a graphically-engineered stress-strain curve of a sample plastic-elastomer polyester as disclosed herein.
FIG. 5 illustrates graphically-engineered stress-strain curves of sample plastic-elastomer polyesters as disclosed herein.

### DETAILED DESCRIPTION

Suitable reactive conditions for this invention include heating the disclosed mixture of constituent components under conditions of melt processing at a sufficient temperature and pressure whereby the raw materials are liquefied, and transesterification and polymerization occurs.

### 1. Aliphatic Diacids

Useful aliphatic dicarboxylic acid starting materials of this invention include oxalic acid, malonic acid, succinic acid, glutaric acid, adipic acid, sebacic acid(- 1,10-decanedicarboxylic acid), azelaic acid (1, 9-nonanedioic acid), and maleopimaric acid. In some applications, aliphatic diacids containing about 1-20 carbon atoms can be used. Aliphatic diacids up to about 350 molecular weight can be used as well. In other applications, dimerized fatty acids (i.e., dimer acids) having a carbon chain of up to 36 C atoms derived from tall oil fatty acids, and maleinized or fumarized wood rosin acids and their derivatives (e.g., pimaric acid) can also be used to produce, for example, fumaric modified pimaric acid.

Suitable reactive equivalents of aliphatic diacids that can be used for this invention include esters, acid chlorides, or anhydrides.

Another useful method for preparing the polymer could incorporate aromatic diacids as a partial starting material. Useful aromatic carboxylic acid starting materials of this invention include phthalic acid, isophthalic acid, sulfophthalic acid, sulfoisophthalic acid, -tetra-(hexa-)hydrophthalic acid, -isophthalic acid, and -terephthalic acid.

### 2. Diols

Suitable diol starting materials of this invention include alkanediols of 2-6 carbon atoms in the carbon chain. Examples include ethylene glycol, 1,3-propanediol, 1,4-butanediol, etc. The alkanediols can also be used in the disclosed admixture. Ether diols can be used in the disclosed admixture as well, including, but not limited to, diethylene glycol, neopentyl glycol, triethylene glycol, poly(ethylene glycols), poly(trimethylene glycols), poly(tetramethylene glycols), and the mixed poly(alkylene glycols) up to about 400 Mn or even up to about 2000 Mn.

### 3. Polyols

Suitable polyols may be used to increase branching of polyester structures of this invention. Examples include trimethylol propane and pentaerythritol. Polyols having a number-average molecular weight of, preferably, about 400 to about 2000 can be used in this invention. Polyols having a number-average molecular weight of up to about 10,000 may be used as well.

### 4. Direct Esterification

Useful diol starting materials for the polyesters of this invention, such as 1, 3-propanediol and 1, 4-butanediol, can be reacted with an aliphatic acid such as succinic acid by a melt polymerization process or other method known in the art. In certain embodiments, high molecular weight poly(butylene succinate) (PBS) and polypropylene succinate) (PPS) are synthesized from dimethylsuccinate and corresponding diols in the presence of titanium complex as a catalyst:

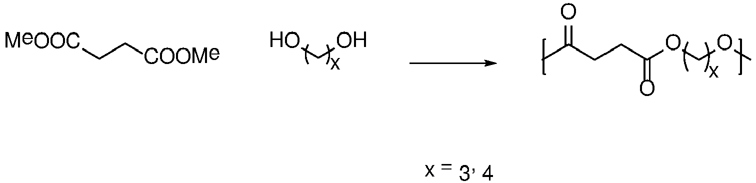

In certain embodiments, the disclosed polymer is prepared wherein the PBS and PPS are synthesized from dimethylsuccinate and corresponding diols in the presence of other metals/metal complexes as catalysts, including, but not limited to, tin, aluminum, cobalt, zinc and calcium complexes, and others well known in the art.

According to other illustrative embodiments, the disclosed polymer is prepared wherein the molar ratio of an aliphatic diacid or reactive equivalent thereof to the at least one diol is about 1.0 to about 2.5. The molar ratio of the polymer may also be about 1.0 to about 1.1 for the aforementioned components.

In additional embodiments, the diacid of the disclosed polymer is succinic acid, which can be bio-based, or a functional equivalent thereof. The reactive equivalent could be a succinic acid ester or anhydride. One or more of the diols of the polymer may be bio-based diols such as 1,3-propanediol or 1,4-butanediol or mixtures thereof. Useful polymers may also comprise one or more diols of propylene glycol or butylene glycol or mixtures thereof. An embodiment of succinic acid, or functional equivalent thereof, a bio-based diol, and polyethylene terephthalate (PET) as components of the polyester can be environmentally favorable in that bio-based and recycled or recyclable raw materials are utilized.

### 5. Transesterification Reactions

The polyester of this invention utilizes polyalkylene terephthalate, or polyalkylene naphthalate, as a starting material for the production of the polymer. One useful polyalkylene terephthalate is PET. Polyethylene naphthenate (PEN) can also be used. Other useful polyalkylene terephthalates include polypropylene terephthalate and polybutylene terephthalate. It should be appreciated that other polyalkylene terephthalates should be considered equivalents of those named herein.

The present invention provides a polymer derived from polycondensation reaction of an aliphatic diacid or reactive equivalent thereof with one or more diols in the presence of the polyalkylene terephthalate or polyalkylene naphthenate. For example, polycondensation reaction of PBS and PPS in the presence of PET produces copolymers due to transesterification reactions:

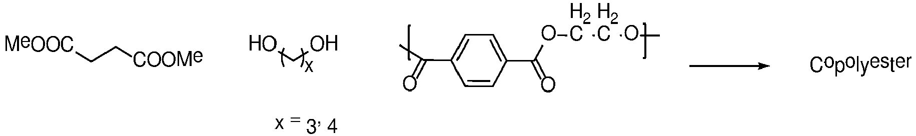

According to the invention, a polymer is derived by admixing under reactive conditions an aliphatic diacid or reactive equivalent thereof and one or more diol monomers, and subsequently adding a polyalkylene terephthalate or polyalkylene naphthenate.

In additional embodiments, a polymer is derived by first preparing PBS or PPS and subsequently admixing under reactive conditions the PBS or PPS with a polyalkylene terephthalate or polyalkylene napthenate.

For purposes of this invention, the use of polyethylene terephthalate is described; however, it should be recognized by those skilled in the art that other polyalkylene terepthalates, or polyalkylene naphthalates, can be used similarly.

According to certain illustrative embodiments, the polyalkylene terephthalate which can be utilized in the preparation of the polymers of this invention is obtained by copolymerizing (i) a carboxylic acid component comprising at least 90 mol % terephthalic acid residues and from 0 to 10 mol % of carboxylic acid comonomer residues; and ii) a hydroxyl component comprising from 90 to 95 mol % ethylene glycol residues and additional hydroxyl residues in an amount from 5 to 10 mol %; wherein the additional hydroxyl residues are chosen from (a) diethylene glycol residues and (b) mixtures of diethylene glycol residues and hydroxyl comonomer residues; based on 100 mol % of carboxylic acid component residues and 100 mol % of hydroxyl component residues in the polyester; wherein at least one of the carboxylic acid and hydroxyl components comprises comonomer residues, the molar ratio of the total comonomer residues to diethylene glycol residues being 1.3:1.0 or greater; and wherein the polyester comprises less than 2.3 mol % of diethylene glycol and has an intrinsic viscosity (in trifluoracetic acid) greater than about 0.40 dL/g and less than about 0.80 dL/g.

In additional embodiments, the polyalkylene terephthalate or polyalkylene naphthenate is prepared using a carboxylic acid comonomer chosen from phthalic acid, isophthalic acid, sulfophthalic acid, sulfoisophthalic acid, (C₁₋C₄) dialkyl esters of isophthalic acid, naphthalene-2,6-dicarboxylic acid, (C₁₋C₄) dialkyl esters of naphthalene 2-6-dicarboxylic acid, cyclohexanedicarboxylic acid, cyclohexanediacetic acid, diphenyl-4,4'-dicarboxylic acid, succinic acid, glutaric acid, adipic acid, azelaic acid, and sebacic acid. It should be appreciated that other polyalkylene terephthalates should be considered equivalents of those named herein. In some embodiments, the hydroxyl comonomer may be cyclohexane dimethanol (CHDM), which may be used in combination with PET to produce the copolymer PETG. PETG is a copolymer of PET and another monomer diol, cyclohexane dimethanol (CHDM), in nearly a 1:2 ratio (on a mol basis) of CHDM to ethlyene glycol. In certain embodiments, a 1:1 ratio (on a mol basis) of CHDM to ethlyene glycol may be used as PETG. A suitable PETG polymer for use in this invention includes Eastar^{™} Copolyester 6763, which is available commercially from Eastman Chemical Company.

In certain illustrative embodiments, a polymer is derived by admixing under reactive conditions an aliphatic diacid or reactive equivalent thereof and one or more diol monomers, and subsequently adding PETG. In other embodiments, the hydroxyl comonomer is chosen from triethylene glycol, 1,4-cyclohexanedimethanol, propane-1,3-diol, butane-1,4-diol, pentane-1,5-diol, hexane-1,6-diol, 3-methylpentanediol-(2,4), 2-methylpentanediol-(1,4), 2,2,4-trimethylpentane-diol-(1,3), 2,5-ethylhexanediol-(1,3), 2,2-diethyl propane-diol-(1,3), hexanediol-(1,3), 1,4-di-(hydroxyethoxy)-benzene, 2,2-bis-(4-hydroxycyclohexyl)-propane, 2,4-dihydroxy-1,1,3,3-tetramethyl-cyclobutane, 2,2-bis-(3-hydroxyethoxyphenyl)-propane, isosorbide and 2,2-bis-(4-hydroxypropoxyphenyl)-propane.

The actual source of PET usable herein is not of critical importance to this invention. "Virgin" PET, that is PET which is commercially produced specifically as a raw material, is acceptable from a chemical standpoint for use herein. Likewise, recycled or reclaimed PET is acceptable from a chemical standpoint. At the time of this application, there are advantages to the environment (reduction of solid waste) and to the economics of this process (recycled PET is much less expensive than virgin PET) by using recycled or reclaimed PET; and, there are no performance disadvantages to using recycled PET versus virgin PET. Typically, the sources for PET are many and varied. One source of either virgin or recycled PET is material from PET polymer manufacturers. Another source for PET can be post-industrial outlets. A further source is reclaimed PET, such as recycled PET beverage bottles. It should be appreciated that any source of PET is acceptable. Polyethylene naphthalate and polybutylene terephthalate are available similarly.

The PET should generally be provided in a comminuted form. It can be flaked, granulated, ground to a powder or pelletized. The only constraint placed on the PET at this point is that it is relatively pure; that is, there should not be a level of impurities above about one weight percent (1 wt %) nor should there be any appreciable level of impurities which are chemically reactive within this process. Polyols also used in the manufacture of PET include, but are not limited to, diethylene glycol, triethylene glycol, neopentyl glycol, cyclohexane dimethanol, butanediols, and propanediols are used as polymer modifiers, and are acceptable as used in this invention.

Alcoholysis occurs with the reaction herein when PET is mixed with the monomers generally employed to produce polyesters (*i.e*., diols and diacids (or their ester equivalents), wherein the dialcohol cleaves the polyester linkages to produce lower molecular weight esters terminated with alcohol groups. The aforementioned process occurs due to the nature of the alcoholysis reaction being more rapid than an acidolysis reaction.

According to the invention, the disclosed polymer is prepared wherein the aliphatic diacid or reactive equivalent thereof and diols are allowed to at least partially react before the polyalkylene terephthalate or polyalkylene naphthenate is added. If desired, the aliphatic diacid or reactive equivalent thereof and diols are allowed to at least partially react to a number average molecular weight of at least about 500 before the polyalkylene terephthalate or polyalkylene naphthenate is added. The polymer may also be prepared wherein the aliphatic diacid or reactive equivalent thereof and diols are allowed to at least partially react to a number average molecular weight of at least about 15,0000 before the polyalkylene terephthalate or polyalkylene napthenate is added.

According to other embodiments, the disclosed polymer is prepared wherein about 0.8 to about 1.0 equivalents of the aliphatic diacid or reactive equivalent are available for each 1.0 equivalent of diols.

In additional embodiments, the disclosed polymer comprises the polyalkylene terephthalate or polyalkylene naphthenate present at a level of about 0.01-95% of the total weight of the aliphatic diacids or reactive equivalent thereof, the diols, and the polyalkylene terephthalate or polyalkylene naphthenate. In other embodiments, (iii) is present at a level of about 5-95% of the total weight of (i), (ii) and (iii).

It should be appreciated that the disclosed polymer may be prepared in the absence of a polyalkylene terephthalate or polyalkylene naphthenate.

In other embodiments, natural proteins (*e.g.*, isolated soy proteins), carbohydrates (*e.g.*, starch, cellulose and their derivatives), soya fatty acids, flour, or soy meal (which comprises proteins and carbohydrates) can be reacted into the polyester. These materials can be used in 3-6 wt % wherein the polyester will be cross-linked to produce a highly viscous thermoplastic material. Suitable reactive conditions for incorporation of the natural proteins, carbohydrates, soya fatty acids, soy meal, or flour include heating the disclosed mixture of constituent components under conditions of melt processing at a sufficient temperature and pressure whereby the raw materials are liquefied, and transesterification or transesterification/transamidation, and polymerization occurs. Transesterification and polymerization occurs when the polymer incorporates carbohydrates, whereas transesterification/transamidation and polymerization occurs when the polymer incorporates natural proteins, soy proteins, and soy meal. It should be appreciated that natural proteins, carbohydrates, soya fatty acids, soy meal, or flour as provided herein may be combined with either PET, PETG, or neither starting material to produce the disclosed polymer.

In certain embodiments, the polymer is prepared by admixing under reactive conditions reactants comprising: (i) an aliphatic diacid or reactive equivalent thereof; (ii) one or more diols; (iii) one or more polyols; and (iv) a polyalkylene terephthalate or polyalkylene naphthenate, wherein the molar ratio of (i) to (ii) to (iii) is about 1 : 0.99 :
0.01 to 1 : 0.98 : 0.02. In additional embodiments, (i), (ii), and (iii) are allowed to at least partially react before (iv) is added. In certain embodiments, (i), (ii), and (iii) are allowed to at least partially react to a number average molecular weight of at least about 2,000 before (iv) is added. In some embodiments, (iv) is present at a level of about 0.01-95% of the total weight of (i), (ii), (iii), and (iv). In certain embodiments, (iv) is present at a level of about 5-95% of the total weight of (i), (ii), (iii), and (iv). According to the invention, an end-capping or chain stopping molecule is added (as described above) to the reaction mixture comprising one or more polyols. It should be appreciated that polyols as provided herein may be combined with either PET, PETG, or neither starting material to produce the disclosed polymer.

In additional embodiments, natural proteins, carbohydrates, soya fatty acids, soy meal, or flour may be reacted into the polyester with the disclosed polyols.

In other embodiments, the aliphatic diacid is selected from a group consisting of wood rosin acids or their derivatives, and tall oil dimer fatty acids. In certain embodiments, the aliphatic diacid is fumarized or maleinized pimaric acid.

### 6. End-Capping Reactions

According to the invention, the polyester polymer is produced by the use of end-capping procedures that involve reaction of a polymerizable end of the molecule (acid end group) with a monofunctional acid such that the new condensation product is incapable of further chain growth (polymerization). As such, the end group derived from a diacid is replaced with the end group of a monoacid. Consequently, the end-capping or chain stopping molecule is added to the reaction mixture before the polymerization is complete.

According to the invention, a monoacid or its ester or anhydride is added to the reaction mixture before the polymerization is complete. One useful monoacid is an aromatic acid (*e.g.*, benzoic acid). It should be appreciated that other aromatic acids should be considered equivalents of those named herein.

Another useful monoacid that can be added to the reaction mixture before the polymerization is complete is a fatty acid. As used herein, the term "fatty acid derivative" means a reactive derivative of a fatty acid, such as the acid chloride, anhydride, or ester thereof, including fatty acid oils such as triglycerides. The fatty acid chains of the fatty acids or fatty acid derivatives can be branched, linear, saturated, unsaturated, hydrogenated, unhydrogenated, or mixtures thereof. In one embodiment it is preferred that at least some of the fatty acid chains are unsaturated drying oil or semi-drying oil chains. Generally, drying oils have an iodine value of about 130 or higher and semi-drying oils have an iodine value of about 90 to about 130. In one embodiment, useful representative fatty acids include those containing linoleic, linolenic and/or oleic acids. Representative acids include soya fatty acid, tall oil fatty acid, coconut fatty acid, safflower fatty acid, linseed fatty acid, etc. The acid chlorides are conveniently prepared by reaction of the fatty acid with a suitable chloride, such as thionyl chloride. Fatty acid anhydrides can be prepared by methods well known in the art such as reaction of the corresponding acid with a dehydrating agent such as acetic anhydride. Suitable fatty oils include sunflower oil, canola oil, dehydrated castor oil, coconut oil, corn oil, cottonseed oil, fish oil, linseed oil, oiticica oil, soya oil, tung oil, tall oil, castor oil, palm oil, safflower oil, blends thereof, and the like.

In additional embodiments, the end-capping or chain stopping molecule is methyl benzoate or soybean methyl ester.

In other embodiments, the monoacid disclosed in the polymer herein is added to the reaction mixture when the reaction is about 50% complete, which corresponds to the polymerization time, or as an average percent attainment of the final number average molecular weight, as determined by gel permeation chromatography, nuclear magnetic resonance spectroscopy or by solution viscometry.

It should be appreciated that development of a polymerization and transesterification route as disclosed herein can be accomplished via a reactive melt extrusion process by feeding individual components of raw-materials of bio-based and/or renewable origin (or a mixture thereof) into an extruder. The polymers of this invention can be blended with other polymers such as acrylics, rosins, polyesters, alkyds, polyurethanes, etc and may incorporate pigments and other additives to produce coating compositions.

The following examples have been selected to illustrate specific embodiments and practices of advantage to a more complete understanding of the invention. Unless otherwise stated, "parts" means parts-by-weight and "percent" is "percent-by-weight".

### Example 1- Initial PPS Polymer (Reference example)

An initial PPS polyester was prepared by charging a one (1) liter reaction vessel with the following:

| | |
|---|---|
| 292.2 grams (2 mol) | dimethyl succinate |
| 319.5 grams (4.2 mol) | 1,3-propanediol |
| 100 milligrams | tetrabutyl titanate |

which were added to the reactor equipped with a mechanical overhead stirrer, gas inlet, thermocouple, and distillation head. The mixture was heated under Argon and the reaction temperature maintained at about 160°C until virtually all of the methanol was distilled off. At this point, the flow of inert gas was turned off and a vacuum was applied to distill off any remaining excess glycol under 500 mTorr pressure. The reaction temperature was slowly increased up to 215°C; after 180 minutes the resultant product of a very viscous melt was discharged into a large amount of water in order to solidify. The end product was collected, dried at ambient conditions, and then dried in a vacuum oven at 50°C.

### Example 2- Initial PBS Polymer (Reference example)

An initial PBS polyester was prepared by charging a 1,000 mL, three-necked, round-bottom flask with the following:

| | |
|---|---|
| 292.2 grams (2 mol) | dimethyl succinate |
| 378.5 grams (4.2 mol) | 1,4-butanediol |
| 100 milligrams | tetrabutyl titanate |

which were added to the reactor equipped with a mechanical stirrer, a nitrogen inlet, and a distillation column. The transesterification reaction was carried out at between 110-190°C under a nitrogen flow for a period of 1 hour with continuous removal of methanol. The polycondensation reaction was continued at 190-215°C under vacuum (500-200 mTorr) for 240 minutes. The highly viscous melt that formed was cooled down to 150°C and discharged into water. The solid mass that formed was washed with water and dried under a reduced pressure at 50°C for 72 hours.

### Example 3 - Direct Esterification (Reference example)

Polyesters of 1,3-propanediol and 1,4-butanediol with succinic acid were prepared by a melt polymerization process according to the conditions of Examples 1 and 2 above. Three copolymers of PPS-co-PBS were synthesized and the ratios of 1,4-butanediol to 1,3-propanediol were 60:40, 50:50, and 25:75 Melting points (Tₘ) of these materials were compared to those of two rosin derivatives found in currently used formulations. Polybutylenesuccinate (PBS, 116⁰C) exhibited higher Tₘ than polypropylenesuccinate (PPS, 48°C), while the rosins melted at 65-70⁰C by DSC measurements. A mixed alcohol polyester PBS/PPS (mol ratio of 1,4-butanediol to 1,3-propanediol is 50:50) was prepared and exhibited a melting point of 75⁰C according to the conditions of Examples 1 and 2 above.

### Example 4 - PPS-co-PET (Reference example)

A PPS-PET copolymer was prepared by using the same type of apparatus as in Example 1 with the following.

| | |
|---|---|
| 292.2 grams (2 mol) | dimethyl succinate |
| 192 grams (4.2 mol) | 1,3-propane diol |
| 100 milligrams | tetrabutyl titanate |

The type and amount of reactants used were the same as in Example 1, but an additional 20 or 30 wt% (based on the total weight of the final polymer) post-consumer PET was added to the reaction mixture along with other monomers. 20 or 30 wt% PET (based on the mass of the final PPS polymer added at the beginning of the reaction. The removal of methanol was completed in less than 90 min between 150-170°C, and the transesterification was continued at 190-215°C under vacuum at reduced pressure (500 mTorr) while the temperature was raised to 300°C and held for 60 minutes at the final stage of condensation under vacuum until all PET pellets melted and disappeared to form a clear homogenous melt. Transesterification converted the methyl ester starting materials into the polymerizable monomer. The highly viscous end product was processed in a similar manner as in Example 1.

### Example 5 - PBS-co-PET (Reference example)

A PBS-PET copolymer was prepared by using the same type of apparatus as in Example 2 with the following:

| | |
|---|---|
| 292.2 grams (2 mol) | dimethyl succinate |
| 378.5 grams (4.2 mol) | 1,4-butanediol |
| 100 milligrams | tetrabutyl titanate |

The type and amount of reactants used were the same as in Example 2, but an additional 86 g (20 wt%) of post-consumer PET was added to the reactor along with other monomers. The transesterification step was performed and methanol was removed under flow of nitrogen followed by polycondensation reaction under vacuum. The reaction temperature was allowed to reach about 290°C and held for 60 minutes at the final stage of condensation under vacuum until all PET pellets melted and disappeared to form a clear homogenous melt.

### Example 6 - Transesterification

Post consumer PET was transesterified with PBS (according to the conditions of Examples 4 and 5 above) to produce polyester with a Tₘ at 85⁰C, in the same range as two rosin derivatives found in currently used formulations referenced in Example 3.

### Example 7 - PBS End-Capped Polyester

A PBS oligomer with controlled molecular weight was prepared by charging a one (1) liter reaction vessel with the following:

| | |
|---|---|
| 365.3 grams (2.5 mol) | dimethylsuccinate |
| 473.1 grams (5.25 mol) | 1,4-butanediol |
| 100 milligrams | tetrabutyl titanate |

which were added to the reactor equipped with a mechanical overhead stirrer, gas inlet, thermocouple, and distillation head. The mixture was heated under argon and the reaction temperature maintained at about 160°C until virtually all of the methanol was distilled off. 146.1 grams (0.5 mol) of soybean methylester end-capping agent was added to the reaction mixture when the reaction was about 50% complete, which corresponds to the polymerization time, or as attainment of the final number molecular weight, as determined by gel permeation chromatography, nuclear magnetic resonance spectroscopy or by solution viscometry. The flow of inert gas was eventually turned off and a vacuum was applied to distill off any remaining excess glycol under 500 mTorr pressure. The reaction temperature was slowly increased up to 215°C; after 240 minutes the resultant product of a low viscosity melt was discharged into a large amount of water in order to solidify. The end product was collected, dried at ambient conditions, and then dried in a vacuum oven at 50°C.

### Example 8 - PPS/PBS End-Capped Copolyester

A PPS/PBS copolyester with methyl stearate end cap was prepared by charging a one (1) liter reaction vessel with the following:

| | |
|---|---|
| 365.35 grams (2.5 mol) | dimethylsuccinate |
| 283.88 grams (3.15 mol) | 1,4-butanediol |
| 159.79 grams (2.1 mol) | 1,3-propanediol |
| 100 milligrams | tetrabutyl titanate |

which were added to the reactor. The mixture was heated under Argon and the reaction temperature remained about 160°C until virtually all of the methanol was distilled off. 74.5 grams (0.25 mol)of methyl stearate end-capping agent was added to the reaction mixture when the reaction was about 50% complete, which corresponds to the polymerization time, or as attainment of the final number average molecular weight, as determined by gel permeation chromatography, nuclear magnetic resonance spectroscopy or by solution viscometry. The flow of inert gas was eventually turned off and a vacuum was applied to distill off the glycol used in excess and produced from reaction under 500 mTorr pressure. The reaction temperature was slowly increased up to 215°C and held for 60 minutes, and the resultant product of a very viscous melt was discharged into a large amount of water in order to solidify. The end product was collected, dried at ambient conditions, and then dried in a vacuum oven at 50°C.

### Example 9 - PBS End-Capped Polyester

A methyl stearate end cap PBS polyester was prepared by charging a one (1) liter reaction vessel with the following:

| | |
|---|---|
| 292.28 grams (2.0 mol) | dimethylsuccinate |
| 108.14 grams (0.5 mol) | dimethylazelate |
| 473.13 grams (5.25 mol) | 1,4-butanediol |
| 74.5 grams (0.25 mol) | methyl stearate end-capping agent |
| 100 milligrams | tetrabutyl titanate |

which were added to the reactor. The reaction was carried out in a similar manner as in Example 7.

### Example 10 - PBS End-Capped Polyester

A methyl benzoate end cap PBS polyester was prepared by charging a one (1) liter reaction vessel with the following:

| | |
|---|---|
| 292.28 grams (2.0 mol) | dimethylsuccinate |
| 108.14 grams (0.5 mol) | dimethylazelate |
| 473.13 grams (5.25 mol) | 1,4-butanediol |
| 74.5 grams (0.25 mol) | methyl benzoate end-capping agent |
| 100 milligrams | tetrabutyl titanate |

which were added to the reactor. The reaction was carried out in a similar manner as in Example 7. The ratio of monomers and end-capper was designed to produce a polymer with a number average molecular weight of about 2000 g/mol.

### Example 11 - PBS End-Capped Polyester

A PBS oligomer was prepared by reactive extrusion with soy meal and epoxidized soybean oil (VIKOFLEX^{®} 7170 from Arkema). Samples were prepared from high molecular weight PBS and 5 wt% additive using a batch blender at 150°C. Blending time was about 3 min for each sample.

### Example 12 - SIPA modified PBS End-Capped Polyester (12k)

A methyl stearate end cap PBS copolyester was prepared by charging a one (1) liter reaction vessel with the following:
361.35 g (2.475 mol) dimethylsuccinate
283.88 g (3.15 mol) 1,4-butanediol
159.79 g, (2.1 mol) 1,3-propanediol
6.7 g (0.025 mol) 5-sulfoisophthalic acid mono sodium salt (SIPA)
21.3 g (0.071 mol) methyl stearate
100 mg titanium butoxide
which were added to the reactor. The reaction was carried out in a similar manner as in Example 7. The ratio of monomers and end-capper was designed to produce a polymer with a molecular weight of about 12,000 g/mol.

### Example 13 - SIPA modified PBS End-Capped Polyester (24k)

A methyl stearate end cap PBS copolyester was prepared by charging a one (1) liter reaction vessel with the following:
361.35 g (2.475 mol) dimethylsuccinate
283.88 g (3.15 mol) 1,4-butanediol
159.79 g, (2.1 mol) 1,3-propanediol
6.7 g (0.025 mol) 5-sulfoisophthalic acid mono sodium salt (SIPA)
11.5 g (0.038 mol) methyl stearate
100 mg titanium butoxide
which were added to the reactor. The reaction was carried out in a similar manner as in Example 7. The ratio of monomers and end-capper was designed to produce a polymer with a molecular weight of about 24,000 g/mol.

### Example 14 - SIPA modified PBS End-Capped Polyester using Succinic Acid (12K)

A methyl stearate end cap PBS copolyester was prepared by charging a one (1) liter reaction vessel with the following:
289.3 g (2.45 mol) dimethylsuccinate
283.88 g (3.15 mol) 1,4-butanediol
159.79 g (2.1 mol) 1,3-propanediol
13.41 g (0.05 mol) 5-sulfoisophthalic acid mono sodium salt (SIPA)
21.3 g (0.071 mol) methyl stearate
which were added to the reactor equipped with a mechanical overhead stirrer, gas inlet, thermocoupler, and distillation head. The mixture was heated under argon and the reaction temperature remained about 180°C until all water was distilled off. Subsequently, the flow of inert gas was turned off and 100 mg titanium butoxide was added, and vacuum was applied to distill off glycol used in excess and produced from reaction under 500 mTorr pressure. The reaction temperature was slowly increased to 215 C and kept at this temperature until condensation of glycol nearly stopped. Finally, the reaction was cooled down to 150°C and the viscose melt was discharged into a large tray. The ratio of monomers and end-capper was designed to produce a polymer with a molecular weight of about 12,000 g/mol.

### Example 15 - Rosin modified PBS End-Capped Polyester using Succinic Acid

A methyl stearate end cap PBS copolyester was prepared by charging a one (1) liter reaction vessel with the following:
289.3 g (2.45 mol) succinic acid
283.88 g (3.15 mol) 1,4-butanediol
159.79 g, (2.1 mol) 1,3-propanediol
30 g rosin
(Sylvacote^{™} 4973 available commercially from Arizona Chemical)
20.02 g (0.071 mol) stearic acid
which were added to the reactor. The reaction was carried out in a similar manner as in Example 3.

### Example 16 - Rosin modified PBS End-Capped Polyester using Succinic Acid

A methyl stearate end cap PBS copolyester was prepared by charging a one (1) liter reaction vessel with the following:
236.18 g (2 mol) succinic acid
283.88 g (3.15 mol) 1,4-butanediol
159.79 g, (2.1 mol) 1,3-propanediol
190 g rosin (0.5 mol, maleopimaric acid)
21.3 g (0.071 mol) stearic acid
which were added to the reactor. The reaction was carried out in a similar manner as in Example 3.

### Example 17 - Stoichiometric Diacid/Diol Reaction using Succinic Acid

A methyl stearate end cap PBS copolyester was prepared by charging a one (1) liter reaction vessel with the following:
289.3 g (2.45 mol) succinic acid
134.6 g (1.494 mol) 1,4-butanediol
75.8 g, (0.996 mol) 1,3-propanediol
20.02 g (0.071 mol) stearic acid
which were added to the reactor equipped with a mechanical overhead stirrer, gas inlet, thermocoupler, and distillation head. The mixture was heated under argon and the reaction temperature increased slowly during 5 hours to 200°C until most of the water was distilled off. Subsequently, 100 mg titanium butoxide was added and the reaction was continued for an additional 5 hours. Finally, the reaction was cooled down to 150°C and the viscose melt was discharged into a large tray.

### Example 18 - Stochiometic Diacid/Polyol/Diol Reaction using Succinic Acid

A PBS copolyester was prepared by charging a one (1) liter reaction vessel with the following:
354.27 g (3.0 mol) succinic acid,
243.32 g (2.7 mol) 1,4-butanediol, 80.50 g,
(0.6 mol) trimethylolpropane (TMP).
which were added to the reactor equipped with a mechanical overhead stirrer, gas inlet, thermocoupler, and distillation head. The mixture was heated under argon and the reaction temperature remained about 160°C for about 2 hours and was increased slowly to 200°C and kept at this temperature until 105 mL water was collected. Subsequently, an additional 11.8 g (0.1 mol) succinic acid and 100 mg titanium butoxide were added and the mixture was heated under 500 mTorr pressure at 200°C for one hour. Finally, the reaction was cooled down to 150°C and the end product (i.e., a viscose melt) was discharged into a large tray.

### Example 19 - Reactive Blending with Soy Meal

Samples were prepared from high molecular weight PBS and 5 wt % soy meal using a batch blender at 150°C. Blending time was about 3 min for each sample.

### Example 20 - Paint Formulation

A representative example of a paint formulation can be prepared by admixing the following:

| | |
|---|---|
| Rosin ester | 55 g |
| PBS-PET copolymer of Example 5 (above) | 15 g |
| Alpha Olefin wax | 5 g |
| Alkyd oil (G-4996) | 5 g |
| TiO₂ | 40 g |
| CaCO₃ | 120 g |
| Glass Beads | 160 g |

where the Rosin ester, PBS-PET copolymer, alkyd oil and wax can be blended in a beaker. In a separate vessel, CaCO₃, TiO₂, and glass beads can be mixed and then added to the aforementioned components and blended together.

The following examples in Table 1 illustrate other embodiments of the invention.

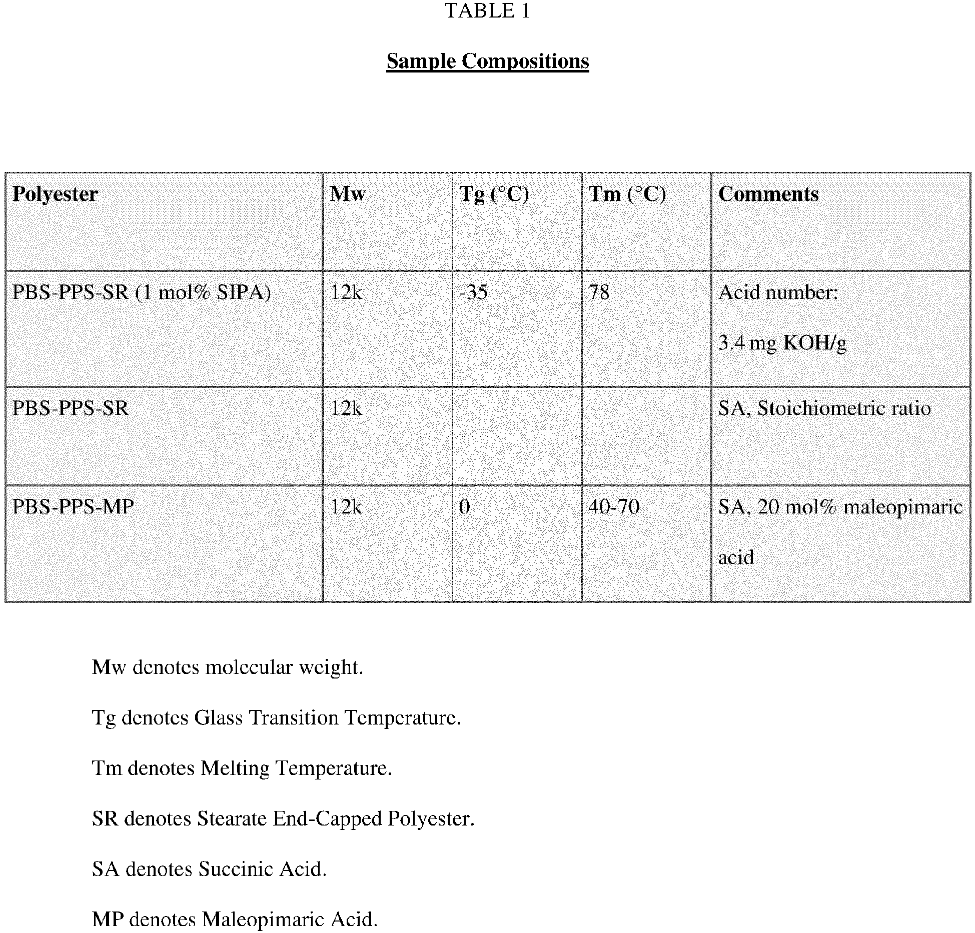

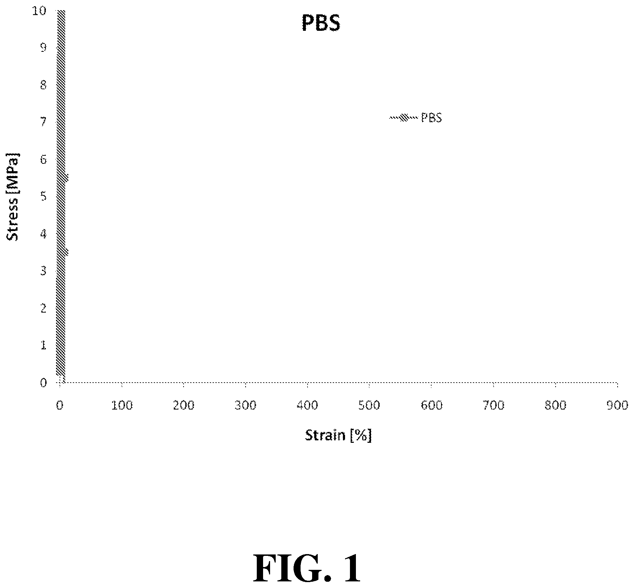

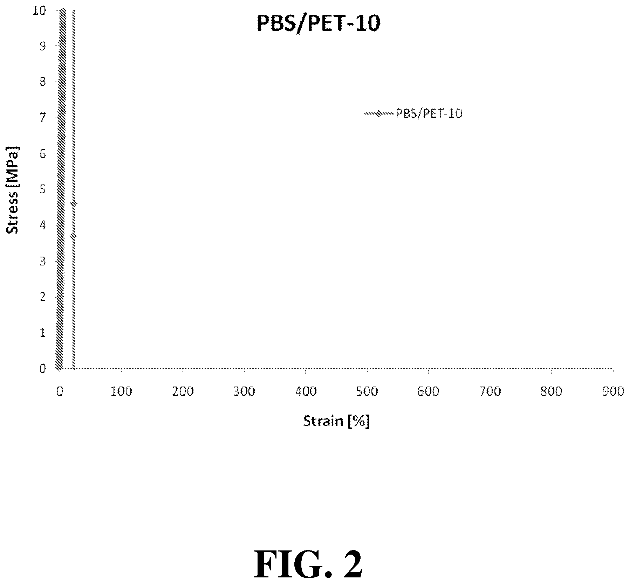

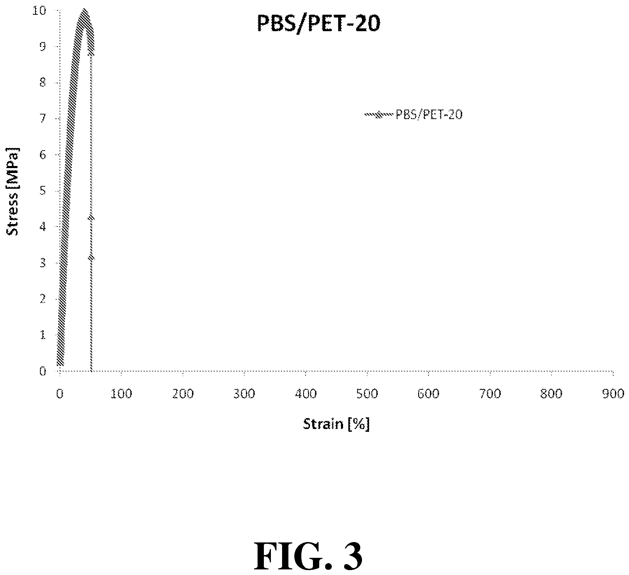

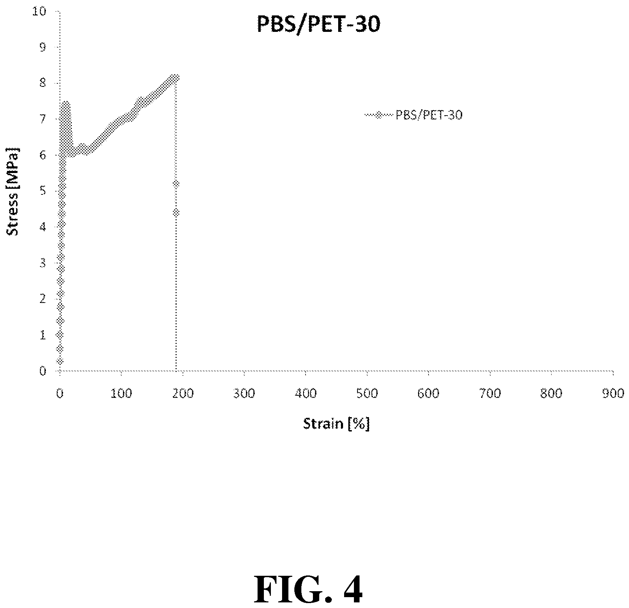

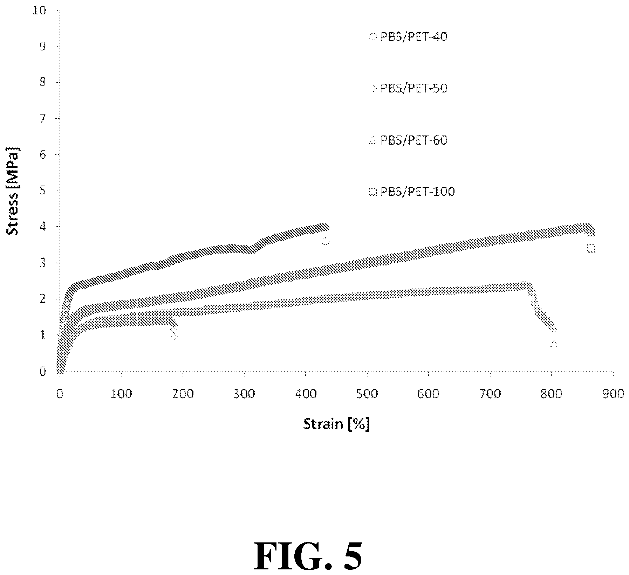

This invention also relates to polymers with reduced crystallinity, which translates into decreased stiffness and strength, yet increases the polymers' toughness and elasticity as indicated in Tables 2 and 3, and Figures 1-5. Therefore, these polymers with reduced crystallinity may be suitable for use in multiple applications, including, but not limited to, the retail (e.g., consumer plastic products), military (e.g., for use in/with munitions), paper/printing, and textile industries. It should be appreciated that development of polymers as disclosed herein may produce polyester materials that could be molded, extruded, spun, or otherwise, converted into fabrics, fibers, filaments, and the like. Additionally, the same disclosed polymers may be suitable for use as blend and alloy components with other materials to achieve various combinations and levels of strength and toughness, and could also be used as substitutes for polyvinyl chloride (PVC), as the polymers described herein do not require any plasticization.

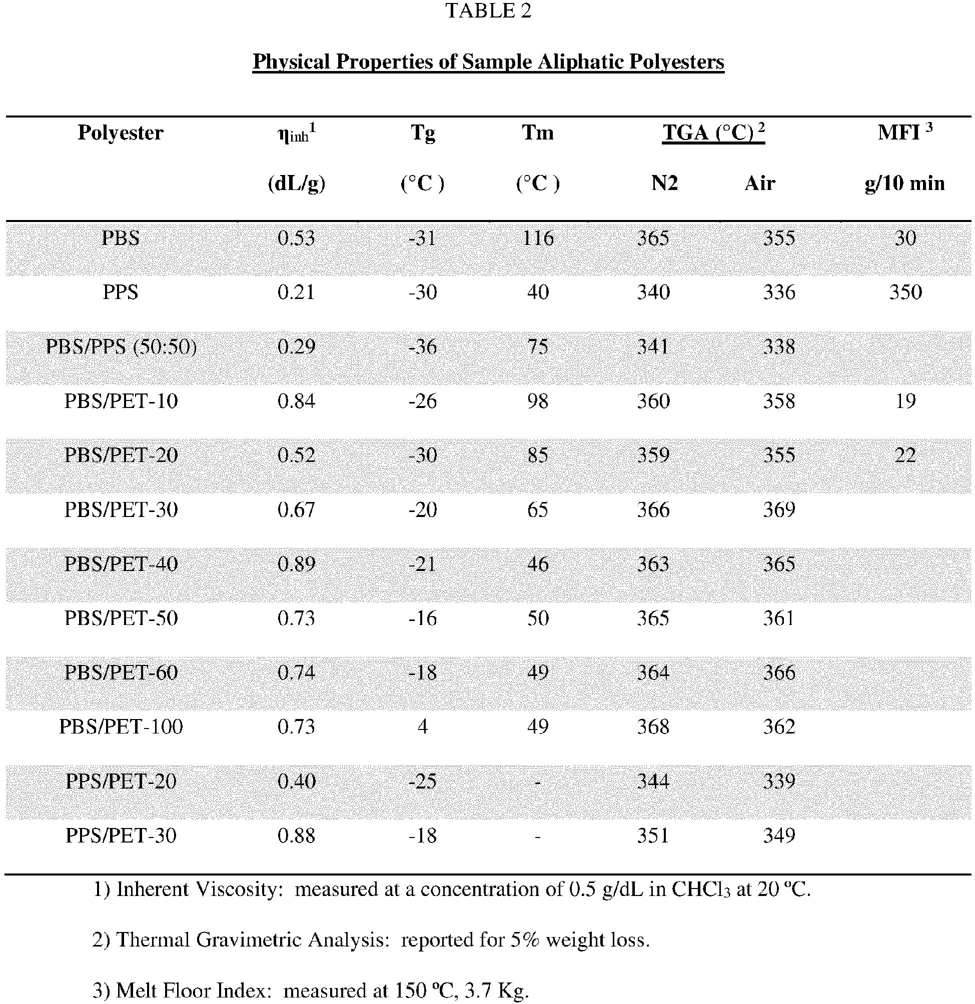

The above hyphenated numerical indicators equate to the amount of PET (in parts by weight) for every 100 parts by weight of PBS or PPS; therefore, PBS/PET-100) equates to a composition comprised of 100 parts by weight of PBS and 100 parts by weight of PET. Consequently, PBS/PET-100 corresponds to a 1:1 ratio (50/50 percent composition). As a further example, PBS/PET-50 equates to a composition comprised of 100 parts by weight of PBS and 50 parts by weight of PET, and therefore corresponds to a 2:1 ratio (67/33 percent composition).

**TABLE 3**

| **Physical Properties of Aliphatic Polyesters** | | | |
|---|---|---|---|
| **Polyester** | **Tensile Modulus (MPa)** | **Tensile Strength (MPa)** | **Elongation at break (%)** |
| PBS | 381 | 24.3 | 12 |
| PBS/PET-10 | 302 | 21.8 | 62 |
| PBS/PET-20 | 267 | 11.6 | 11 |
| PBS/PET-30 | 144 | 8.1 | 187 |
| PBS/PET-40 | 39 | 4.7 | 430 |
| PBS/PET-50 | 8 | 1.4 | 190 |
| PBS/PET-60 | 6 | 2.3 | 800 |
| PBS/PET-100 | 12 | 3.8 | 635 |

Elongation at break: measured by the amount a given material stretches before it breaks, as a percentage of its original dimensions.

Figures 1-5 illustrate stress-strain curves based on material testing of sample plastic-elastomer polyesters as disclosed herein. The stress-strain curves reflect the relationship between the stress and strain that a particular material displays, and is obtained by recording the amount of deformation (strain) at distinct intervals of tensile or compressive loading (stress). These curves reveal many of the properties of a material (including data to establish the Modulus of Elasticity). Peak tensile strength is equivalent to the maximum peak on the y-axis. Stiffness (Tensile Modulus) is measured by the slope of the curves. Toughness is measured by the area underneath the stress-strain curves. Toughness is a combination of strength and elasticity (i.e., extensibility, stretchiness). Although the stress-strain curves depicted herein reflect certain intrinsic properties of the materials used in the tested polyesters, the stress-strain curves alone may not be indicative of the suitability of a particular polyester as disclosed herein.

While this invention has been described by a specific number of embodiments, other variations and modifications may be made without departing from the scope of the invention as set forth in the appended claims.

## Claims

1. A polymer prepared by admixing under reactive conditions reactants comprising:
(i) an aliphatic diacid or reactive equivalent thereof;
(ii) one or more diols; and
(iii) a polyalkylene terephthalate or polyalkylene naphthenate;
wherein an end-capping or chain stopping molecule is added to the reaction mixture before the polymerization is complete, further wherein the end-capping or chain stopping molecule is a monoacid or its ester, anhydride, or acid chloride and wherein (i) and (ii) are allowed to at least partially react before (iii) is added.

2. A polymer prepared by admixing under reactive conditions reactants comprising:
(a) an aliphatic diacid or reactive equivalent thereof;
(b) one or more diols;
(c) one or more polyols; and
(d) a polyalkylene terephthalate or polyalkylene naphthenate;
wherein an end-capping or chain stopping molecule is added to the reaction mixture before the polymerization is complete, further wherein the end-capping or chain stopping molecule is a monoacid or its ester, anhydride, or acid chloride, and wherein the molar ratio of (a) to (b) to (c) is about 1 : 0.99 : 0.01 to 1 : 0.98 : 0.02.

3. The polymer of claim 1 wherein the molar ratio of (i) to (ii) is about 1.0 to about 2.5, preferably about 1.0 to about 1.1.

4. The polymer of claim 1 wherein (i) and (ii) are allowed to at least partially react to a number average molecular weight of at least about 500, more preferably at least about 15,000 before (iii) is added, or the polymer of claim 2 wherein (a), (b), and (c) are allowed to at least partially react, preferably to a number average molecular weight of at least about 2,000 before (d) is added, wherein the number average molecular is determined by gel permeation chromatography, nuclear magnetic resonance spectroscopy or by solution viscometry.

5. The polymer of claim 4 wherein about 0.8 to about 1.0 equivalents of (i) are available for each 1.0 equivalent of (ii).

6. The polymer of claim 1 or claim 2 wherein (iii) is present at a level of about 0.01-95%, preferably at a level of about 5-95% of the total weight of (i), (ii) and (iii) or wherein (d) is present at a level of about 0.01-95%, preferably at a level of about 5-95% of the total weight of (a), (b), (c), and (d).

7. The polymer of claim 1 or claim 2 wherein the end-capping or chain stopping molecule is methyl benzoate, soybean methyl ester, or the polymer of claim 1 wherein the end-capping or chain stopping molecule is an aromatic acid, benzoic acid, or a fatty acid.

8. The polymer of claim 1 or claim 2 wherein the monoacid is added to the reaction mixture when the reaction is about 50% complete, which corresponds to the polymerization time, or as attainment of the final number average molecular weight, as determined by gel permeation chromatography, nuclear magnetic resonance spectroscopy or by solution viscometry.

9. The polymer of claim 1 wherein the diacid is succinic acid or a reactive equivalent thereof, preferably a succinic acid ester.

10. The polymer of claim 1 or claim 2 wherein one or more of the diols is 1,3-propanediol,1,4-butanediol or mixtures thereof or propylene glycol,butylene glycol or mixtures thereof.

11. The polymer of claim 1 wherein the polyalkylene terephthalate is prepared by copolymerizing (i) a carboxylic acid component comprising at least 90 mol % terephthalic acid residues and from 0 to 10 mol % of carboxylic acid comonomer residues; ii) a hydroxyl component comprising from 90 to 95 mol % ethylene glycol residues and additional hydroxyl residues in an amount from 5 to 10 mol %; wherein the additional hydroxyl residues are chosen from (a) diethylene glycol residues and (b) mixtures of diethylene glycol residues and hydroxyl comonomer residues; based on 100 mol % of carboxylic acid component residues and 100 mol % of hydroxyl component residues in the polyester; wherein at least one of the carboxylic acid and hydroxyl components comprises comonomer residues, the molar ratio of the total comonomer residues to diethylene glycol residues being 1.3:1.0 or greater; and wherein the polyester comprises less than 2.3 mol % of diethylene glycol and has an intrinsic viscosity (in trifluoracetic acid) greater than about 0.40 dL/g and less than about 0.80 dUg,
wherein the carboxylic acid comonomer is preferably chosen from phthalic acid, isophthalic acid, sulfophthalic acid, sulfoisophthalic acid, (C₁-C₄) dialkyl esters of isophthalic acid, naphthalene-2,6-dicarboxylic acid, (C₁-C₄) dialkyl esters of naphthalene 2,6-dicarboxylic acid, cyclohexanedicarboxylic acid, cyclohexanediacetic acid, diphenyl-4,4'-dicarboxylic acid, succinic acid, glutaric acid, adipic acid, azelaic acid, and sebacic acid more preferably from isophthalic acid and naphthalene 2,6-dicarboxylic acid or
wherein the hydroxyl comonomer is preferably chosen from triethylene glycol, 1,4-cyclohexanedimethanol, propane-1,3-diol, butane-1,4-diol, pentane-1,5-diol, hexane-1,6-diol, 3-methylpentanediol-(2,4), 2-methylpentanediol-(1,4), 2,2,4-trimethylpentane-diol-(1,3), 2,5-ethylhexanediol-(1,3), 2,2-diethyl propane-diol-(1,3), hexanediol-(1,3), 1,4-di-(hydroxyethoxy)-benzene, 2,2-bis-(4-hydroxycyclohexyl)-propane, 2,4-dihydroxy-1,1,3,3-tetramethyl-cyclobutane, 2,2-bis-(3-hydroxyethoxyphenyl)-propane, isosorbide and 2,2-bis-(4-hydroxypropoxyphenyl)-propane, more preferably is cyclohexane dimethanol.

12. The polymer of claim 2 wherein the aliphatic diacid is selected from a group consisting of wood rosin acids or their derivatives, and tall oil dimer fatty acids, preferably wherein the aliphatic diacid is fumarized or maleinized pimaric acid.

13. The polymer of claim claim 2 wherein the polyol is selected from a group consisting of pentaerythritol, trimethylol propane, and mixtures thereof.

14. A coating composition which comprises:
(i) the polymer of claim 1 or claim 2; and
(ii) an additional polymer selected from the group consisting of acrylics, rosins, polyesters, alkyds, and polyurethanes.

## Patentansprüche

1. Polymer, hergestellt durch Beimischen unter reaktiven Bedingungen von Reaktanten, umfassend:
(i) eine aliphatische Disäure oder ein reaktives Äquivalent davon;
(ii) ein oder mehrere Diole; und
(iii) ein Polyalkylenterephthalat oder Polyalkylennaphthenat;
wobei ein Endverkappungs- oder Kettenstoppmolekül zu der Reaktionsmischung zugegeben wird bevor die Polymerisation abgeschlossen ist, ferner wobei das Endverkappungs- oder Kettenstoppmolekül eine Monosäure oder deren Ester, Anhydrid oder Säurechlorid ist und wobei (i) und (ii) zumindest teilweise reagieren gelassen werden, bevor (iii) zugegeben wird.

2. Polymer, hergestellt durch Beimischen unter reaktiven Bedingungen von Reaktanten, umfassend:
(a) eine aliphatische Disäure oder ein reaktives Äquivalent davon;
(b) ein oder mehrere Diole;
(c) ein oder mehrere Polyole; und
(d) ein Polyalkylenterephthalat oder Polyalkylennaphthenat;
wobei ein Endverkappungs- oder Kettenstoppmolekül zu der Reaktionsmischung zugegeben wird, bevor die Polymerisation abgeschlossen ist, ferner wobei das Endverkappungs- oder Kettenstoppmolekül eine Monosäure oder deren Ester, Anhydrid oder Säurechlorid ist und wobei das Molverhältnis von (a) zu (b) zu (c) etwa 1: 0,99 : 0,01 bis 1: 0,98 : 0,02 ist.

3. Polymer nach Anspruch 1, wobei das Molverhältnis von (i) zu (ii) etwa 1,0 bis etwa 2,5, vorzugsweise etwa 1,0 bis etwa 1,1 ist.

4. Polymer nach Anspruch 1, wobei (i) und (ii) zumindest teilweise bis zu einem zahlenmittleren Molekulargewicht von mindestens etwa 500, mehr bevorzugt mindestens etwa 15.000, reagierengelassen werden, bevor (iii) zugegeben wird, oder das Polymer nach Anspruch 2, wobei (a), (b) und (c) zumindest teilweise, vorzugsweise bis zu einem zahlenmittleren Molekulargewicht von mindestens etwa 2.000, reagierengelassen werden, bevor (d) zugegeben wird, wobei das zahlenmittlere Molekulargewicht durch Gelpermeationschromatographie, kernmagnetische Resonanzspektroskopie oder durch Lösungsviskosimetrie bestimmt wird.

5. Polymer nach Anspruch 4, wobei etwa 0,8 bis etwa 1,0 Äquivalente von (i) für jedes 1,0 Äquivalent von (ii) verfügbar sind.

6. Polymer nach Anspruch 1 oder 2, wobei (iii) in einem Anteil von etwa 0,01-95 %, vorzugsweise in einem Anteil von etwa 5-95 % des Gesamtgewichts von (i), (ii) und (iii) vorhanden ist oder wobei (d) in einem Anteil von etwa 0,01-95 %, vorzugsweise in einem Anteil von etwa 5-95 % des Gesamtgewichts von (a), (b), (c) und (d) vorhanden ist.

7. Polymer nach Anspruch 1 oder 2, wobei das endverkappende oder kettenstoppende Molekül Methylbenzoat, Sojabohnenmethylester oder das Polymer nach Anspruch 1 ist, wobei das endverkappende oder kettenstoppende Molekül eine aromatische Säure, Benzoesäure oder eine Fettsäure ist.

8. Polymer nach Anspruch 1 oder 2, wobei die Monosäure zu der Reaktionsmischung gegeben wird, wenn die Reaktion etwa 50 % abgeschlossen ist, was der Polymerisationszeit oder dem Erreichen des endgültigen zahlenmittleren Molekulargewichts entspricht, wie durch Gelpermeationschromatographie, kernmagnetische Resonanzspektroskopie oder durch Lösungsviskosimetrie bestimmt.

9. Polymer nach Anspruch 1, wobei die Disäure Bernsteinsäure oder ein reaktives Äquivalent davon, vorzugsweise ein Bernsteinsäureester, ist.

10. Polymer nach Anspruch 1 oder 2, wobei eines oder mehrere der Diole 1,3-Propandiol, 1,4-Butandiol oder Mischungen davon oder Propylenglykol, Butylenglykol oder Mischungen davon sind.

11. Polymer nach Anspruch 1, wobei das Polyalkylenterephthalat durch Copolymerisieren (i) einer Carbonsäurekomponente, die mindestens 90 Mol-% Terephthalsäurereste und von 0 bis 10 Mol- % Carbonsäuremonomerreste umfasst; ii) einer Hydroxylkomponente, die 90 bis 95 Mol-% Ethylenglykolreste und zusätzliche Hydroxylreste in einer Menge von 5 bis 10 Mol-% umfasst, hergestellt wird; wobei die zusätzlichen Hydroxylreste aus (a) Diethylenglykolresten und (b) Mischungen von Diethylenglykolresten und Hydroxylcomonomerresten ausgewählt sind; basierend auf 100 Mol-% der Carbonsäurekomponentenreste und 100 Mol-% der Hydroxylkomponentenreste in dem Polyester; wobei mindestens eines von der Carbonsäure und der Hydroxylkomponente Comonomerreste umfasst, wobei das Molverhältnis der gesamten Comonomerreste zu Diethylenglykolresten 1,3:1,0 oder größer ist; und wobei der Polyester weniger als 2,3 Mol-% Diethylenglykol umfasst und eine intrinsische Viskosität (in Trifluoressigsäure) von mehr als etwa 0,40 dL/g und weniger als etwa 0,80 dL/g aufweist,
wobei das Carbonsäurecomonomer vorzugsweise ausgewählt ist aus Phthalsäure, Isophthalsäure, Sulfophthalsäure, Sulfoisophthalsäure, (C₁-C₄)-Dialkylestern der Isophthalsäure, Naphthalin-2,6-dicarbonsäure, (C₁-C₄)-Dialkylestern der Naphthalin-2,6-Dicarbonsäure, Cyclohexandicarbonsäure, Cyclohexandiessigsäure, Diphenyl-4,4-dicarbonsäure, Bernsteinsäure, Glutarsäure, Adipinsäure, Azelainsäure und Sebacinsäure, vorzugsweise aus Isophthalsäure und Naphthalin-2,6-dicarbonsäure oder
wobei das Hydroxylcomonomer vorzugsweise ausgewählt ist aus Triethylenglykol, 1,4-Cyclohexandimethanol, Propan-1,3-diol, Butan-1,4-diol, Pentan-1,5-diol, Hexan-1,6-diol, 3-Methylpentandiol-(2,4), 2-Methylpentandiol-(1,4), 2,2,4-Trimethylpentandiol-(1,3), 2,5-Ethylhexandiol-(1,3), 2, 2-Diethylpropandiol-(1,3), Hexandiol-(1,3), 1,4-Di-(hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-hydroxyethoxyphenyl)-propan, Isosorbid und 2,2-Bis-(4-hydroxypropoxyphenyl)-propan, besonders bevorzugt ist Cyclohexandimethanol.

12. Polymer nach Anspruch 2, wobei die aliphatische Disäure aus einer Gruppe ausgewählt ist, die aus Holzharzsäuren oder deren Derivaten und Tallöl-Dimerfettsäuren besteht, wobei die aliphatische Disäure vorzugsweise fumarisierte oder maleinisierte Pimarsäure ist.

13. Polymer nach Anspruch 2, wobei das Polyol aus einer Gruppe ausgewählt ist, die aus Pentaerythrit, Trimethylol-Propan und Mischungen davon besteht.

14. Beschichtungszusammensetzung, umfassend:
(i) das Polymer nach Anspruch 1 oder Anspruch 2; und
(ii) ein zusätzliches Polymer, ausgewählt aus der Gruppe bestehend aus Acrylen, Kolophonium, Polyestern, Alkydharzen und Polyurethanen.

## Revendications

1. Polymère préparé en mélangeant dans des conditions réactionnelles des réactifs comprenant :
(i) un diacide aliphatique ou un réactif équivalent de celui-ci ;
(ii) un ou plusieurs diols ; et
(iii) un téréphtalate de polyalkylène ou naphténate de polyalkylène ;
dans lequel une molécule de coiffe terminale ou d'arrêt de chaîne est ajoutée au mélange réactionnel avant que la polymérisation soit achevée, dans lequel en outre la molécule de coiffe terminale ou d'arrêt de chaîne est un monoacide ou son ester, anhydride ou chlorure d'acide et dans lequel on laisse réagir (i) et (ii) au moins partiellement avant d'ajouter (iii).

2. Polymère préparé en mélangeant dans des conditions réactionnelles des réactifs comprenant :
(a) un diacide aliphatique ou réactif équivalent de celui-ci ;
(b) un ou plusieurs diols ;
(c) un ou plusieurs polyols ; et
(d) un téréphtalate de polyalkylène ou naphténate de polyalkylène ;
dans lequel une molécule de coiffe terminale ou d'arrêt de chaîne est ajoutée au mélange réactionnel avant que la polymérisation soit achevée, dans lequel en outre la molécule de coiffe terminale ou d'arrêt de chaîne est un monoacide ou son ester, anhydride ou chlorure d'acide, et dans lequel le rapport molaire de (a) à (b) à (c) va d'environ 1 - 0,99 : 0,01 à 1 : 0,98 : 0,02.

3. Polymère selon la revendication 1 dans lequel le rapport molaire de (i) à (ii) va d'environ 1,0 à environ 2,5, de préférence d'environ 1,0 à environ 1,1.

4. Polymère selon la revendication 1 dans lequel on laisse réagir (i) et (ii) au moins partiellement jusqu'à une masse moléculaire moyenne en nombre d'au moins environ 500, plus préférablement d'au moins environ 15 000 avant d'ajouter (iii), ou polymère selon la revendication 2 dans lequel on laisse réagir (a), (b) et (c) au moins partiellement, de préférence jusqu'à une masse moléculaire moyenne en nombre d'au moins environ 2000 avant d'ajouter (d), la moléculaire moyenne en nombre étant déterminée par chromatographie par perméation sur gel, spectroscopie par résonance magnétique nucléaire ou par viscosimétrie en solution.

5. Polymère selon la revendication 4 dans lequel environ 0,8 à environ 1,0 équivalent de (i) est disponible pour chaque 1,0 équivalent de (ii).

6. Polymère selon la revendication 1 ou la revendication 2 dans lequel (iii) est présent à un taux d'environ 0,01 à 95 %, de préférence à un taux d'environ 5 à 95 % du poids total de (i), (ii) et (iii) ou dans lequel (d) est présent à un taux d'environ 0,01 à 95 %, de préférence à un taux d'environ 5 à 95 % du poids total de (a), (b), (c) et (d).

7. Polymère selon la revendication 1 ou la revendication 2 dans lequel la molécule de coiffe terminale ou d'arrêt de chaîne est benzoate de méthyle, ester méthylique de soja, ou polymère selon la revendication 1 dans lequel la molécule de coiffe terminale ou d'arrêt de chaîne est un acide aromatique, de l'acide benzoïque ou un acide gras.

8. Polymère selon la revendication 1 ou la revendication 2 dans lequel le monoacide est ajouté au mélange réactionnel lorsque la réaction est achevée à environ 50 %, ce qui correspond au temps de polymérisation, ou lorsque l'on atteint la masse moléculaire moyenne en nombre finale, telle que déterminée par chromatographie par perméation sur gel, spectroscopie par résonance magnétique nucléaire ou par viscosimétrie en solution.

9. Polymère selon la revendication 1 dans lequel le diacide est de l'acide succinique ou un équivalent réactif de celui-ci, de préférence un ester d'acide succinique.

10. Polymère selon la revendication 1 ou la revendication 2 dans lequel un ou plusieurs des diols sont 1,3-propanediol,1,4-butanediol ou mélanges de ceux-ci ou propylène glycol, butylène glycol ou mélanges de ceux-ci.

11. Polymère selon la revendication 1 dans lequel le téréphtalate de polyalkylène est préparé par copolymérisation (i) d'un composant acide carboxylique comprenant au moins 90 % molaires de résidus d'acide téréphtalique et de 0 à 10 % molaires de résidus de comonomère acide carboxylique ; ii) d'un composant hydroxyle comprenant de 90 à 95 % molaires de résidus d'éthylène glycol et des résidus d'hydroxyle supplémentaires en une quantité allant de 5 à 10 % molaires ; dans lequel les résidus d'hydroxyle supplémentaires sont choisis parmi (a) des résidus de diéthylène glycol et (b) des mélanges de résidus de diéthylène glycol et de résidus de comonomère hydroxyle ; en fonction de 100 % molaire de résidus de composant acide carboxylique et de 100 % molaire de résidus de composant hydroxyle dans le polyester ; dans lequel au moins l'un des composants acide carboxylique et hydroxyle comprend des résidus de comonomère, le rapport molaire des résidus de comonomère totaux aux résidus de diéthylène glycol valant 1,3:1,0 ou plus ; et dans lequel le polyester comprend moins de 2,3 % molaires de diéthylène glycol et a une viscosité intrinsèque (dans de l'acide trifluoracétique) supérieure à environ 0,40 dL/g et inférieure à environ 0,80 dL/g,
dans lequel le comonomère acide carboxylique est choisi de préférence parmi acide phtalique, acide isophtalique, acide sulfophtalique, acide sulfoisophtalique, esters dialkyliques en (C₁ à C₄) d'acide isophtalique, acide naphtalène-2,6-dicarboxylique, esters dialkyliques en (C₁ à C₄) d'acide naphtalène-2,6-dicarboxylique, acide cyclohexane-dicarboxylique, acide cyclohexanediacétique, acide diphényle-4,4'-dicarboxylique, acide succinique, acide glutarique, acide adipique, acide azélaïque, et acide sébacique plus préférablement parmi acide isophtalique et acide naphtalène-2,6-dicarboxylique ou
dans lequel le comonomère hydroxyle est choisi de préférence parmi triéthylène glycol, 1,4-cyclohexanediméthanol, propane-1,3-diol, butane-1,4-diol, pentane-1,5-diol, hexane-1,6-diol, 3-méthylpentanediol-(2,4), 2-méthylpentanediol-(1,4), 2,2,4-triméthylpentane-diol-(1,3), 2,5-éthylhexanediol-(1,3), 2,2-diéthyl-propane-diol-(1,3), hexanediol-(1,3), 1,4-di-(hydroxyéthoxy)-benzène, 2,2-bis-(4-hydroxycyclohexyl)-propane, 2,4-dihydroxy-1,1,3,3-tétraméthyl-cyclobutane, 2,2-bis-(3-hydroxyéthoxyphényl)-propane, isosorbide et 2,2-bis-(4-hydroxypropoxyphényl)-propane, plus préférablement est cyclohexanediméthanol.

12. Polymère selon la revendication 2 dans lequel le diacide aliphatique est choisi dans un groupe constitué par acides de colophane de bois ou leurs dérivés, et acides gras dimères de tallöl, de préférence dans lequel le diacide aliphatique est de l'acide pimarique fumarisé ou maléinisé.

13. Polymère selon la revendication revendication 2 dans lequel le polyol est choisi dans un groupe constitué par pentaérythritol, triméthylol-propane, et mélanges de ceux-ci.

14. Composition de revêtement qui comprend :
(i) le polymère selon la revendication 1 ou la revendication 2 ; et
(ii) un polymère supplémentaire choisi dans le groupe constitué par acrylique, colophanes, polyesters, alkydes et polyuréthanes.
